# EUROPÄISCHE PATENTSCHRIFT

(11) **EP 1 802 443 B1**
(45) Veröffentlichungstag und Bekanntmachung des Hinweises auf die Patenterteilung: **20.05.2015**
(21) Anmeldenummer: 05786057.9
(22) Anmeldetag: 22.09.2005
(51) Int. Cl.: B29C 47/76

(54) **EXTRUDER**
EXTRUDER
EXTRUDEUSE

(30) Priorität: 20.10.2004 DE 102004051203
(43) Veröffentlichungstag der Anmeldung: 04.07.2007
(73) Patentinhaber: Blach Verwaltungs GmbH & Co. KG, 74348 Lauffen (DE)
(72) Erfinder: BLACH, Josef, A., 74348 Lauffen a. N. (DE)
(74) Vertreter: vP-IP von Puttkamer Berngruber Loth Spuhler
(86) Internationale Anmeldenummer: PCT/EP2005/010233
(87) Internationale Veröffentlichungsnummer: WO 2006/042613

(56) Entgegenhaltungen:
- US-A- 3 742 093
- US-A- 4 117 548
- US-A- 5 283 021
- US-A1- 2004 072 920
- US-B1- 6 422 732

## Beschreibung

Die Erfindung bezieht sich auf einen Extruder nach dem Oberbegriff des Anspruchs 1.

Extruder finden zum Fördern und Aufbereiten von Stoffen vielfache Anwendung. Um Gase bei der Verarbeitung von Kunststoffen in einem Extruder abzutrennen, ist in dem Gehäuse des Verfahrensteils des Extruders, in dem der feste bis viskose Kunststoff bearbeitet wird, eine Gasaustrittsöffnung vorgesehen. Um zu verhindern, dass der Kunststoff aus dem Verfahrensteil über diese Öffnung austritt, ist die Materialrückhalteeinrichtung vorgesehen, die auch "Stuffer" genannt wird. Sie weist eine oder zwei Schneckenwellen auf, deren Schnecke über die gesamte Länge eine Steigungsrichtung besitzt, durch die sie den Kunststoff, der in diese Öffnung eintritt, in das Verfahrensteil zurückdrängt, während das Gas, das die Schnecke passiert, abgesaugt werden kann. Eine solche Vorrichtung ist bekannt aus dem Dokument US-B1-6 422 732.

Wie sich gezeigt hat, weist ein mit einem Extruder mit einer solchen Rückhalteeinrichtung extrudierter Kunststoff jedoch eine große Menge schwarzer Punkte, sogenannter "Black Specks" auf, die insbesondere in Produkten aus transparentem Kunststoff, wie PET äußerst störend sind.

Aufgabe der Erfindung ist es, einen Extruder mit einer solchen Rückhalteeinrichtung an der Gasaustrittsöffnung bereitzustellen, bei dem die Bildung von schwarzen Punkten weitgehend beseitigt ist.

Dies wird erfindungsgemäß mit dem in Anspruch 1 gekennzeichneten Extruder erreicht. In den Unteransprüchen sind vorteilhafte Ausgestaltungen der Erfindung wiedergegeben.

Wie sich gezeigt hat, ist die Bildung der schwarzen Punkte darauf zurückzuführen, dass die Schneckenwelle und die Innenwandung der Rückhalteeinrichtung die gleiche hohe Temperatur wie das Verfahrensteil besitzen. Bei dem bekannten Extruder können damit Kunststoffreste, die an der heißen Schneckenwelle oder Innenwandung der Rückhalteeinrichtung haften bleiben, sich zersetzen. Da die Zersetzung von der Dauer abhängt, mit der ein Kunststoffrest an der heißen Metalloberfläche der Schnecke bzw. der Innenwandung der Rückhalteeinrichtung haftet, wird ein Kunststoffrest, der von der Schnecke über deren gesamte Länge bis zur Gasaustrittsöffnung in dem Zwischengehäuse der Materialrückhalteeinrichtung transportiert wird, naturgemäß eine; besonders starke Zersetzung erfahren. Die festen Zersetzungsprodukte werden bei dem bekannten Extruder durch die über ihre volle Länge rückfördernde Schnecke der Materialrückhalteeinrichtung dann zurück zum Verfahrensteil gefördert und mit dem Kunststoff in dem Verfahrensteil vermischt, um im extrudierten Kunststoff produkt die schwarzen Punkte zu bilden.

Ausgehend von dieser Erkenntnis beruht die Erfindung darauf, nur den dem Verfahrensteil benachbarten Abschnitt der Schnecke in der Materialrückhalteeinrichtung rückfördernd auszubilden. Mit diesem Abschnitt ist der Kunststoff nämlich nur kurze Zeit in Kontakt. Zudem wird in diesem Abschnitt das Material an der heißen Schneckenoberfläche und Innenwandung ähnlich wie im Verfahrensteil ständig erneuert. Eine Zersetzung des Kunststoffs und damit eine Bildung schwarzer Punkte ist in diesem Abschnitt dadurch verhindert.

Demgegenüber gelangen Kunststoffreste, die diesen Abschnitt der Materialrückhalteeinrichtung passieren, erfindungsgemäß in den Schneckenabschnitt mit der entgegengesetzten Steigung, d. h. sie werden nicht mehr zu dem Verfahrensteil zurückgefördert, sondern davon weg und werden damit vom Verfahrensteil abgetrennt. In diesem Bereich sind sie damit längere Zeit der heißen Temperatur der Schnecke und der Innenwand des Zwischengehäuses ausgesetzt und werden zersetzt. Die festen schwarzen Zersetzungspunkte können zusammen mit dem abgetrennten Gas über die Gasaustrittsöffnung in dem Zwischengehäuse abgesaugt werden, oder es kann eine zusätzliche Öffnung an der Unterseite des Zwischengehäuses vorgesehen sein, aus dem die Rückstände nach unten fallen.

Das Verfahrensteil des erfindungsgemäßen Extruders kann nur eine einzige Schneckenwelle aufweisen. Jedoch können auch zwei oder mehrere, insbesondere acht oder mehr achsparallele Schneckenelemente vorgesehen sein, die dicht kämmend ineinander greifen können, wobei die Schneckenwellen von achsparallelen konkaven Kreissegmenten an der Innenwand des Extrudergehäuses aufgenommen und geführt werden. Dabei können mehrere Schneckenwellen in einer Ebene angeordnet sein oder einen Kranz bilden, wie in EP 0 788 867 B1 beschrieben.

Die Materialrückhalteeinrichtung kann ebenfalls nur eine Schneckenwelle besitzen. Vorzugsweise sind jedoch zwei oder mehr achsparallele Schneckenwellen vorgesehen, deren Schnecken dicht kämmend ineinander greifen und die jeweils von achsparallelen konkaven Kreissegmenten in der Innenwand des Extrudergehäuses aufgenommen und geführt werden.

Dabei können gleichsinnig oder gegensinnig drehende Schnecken in der Materialrückhalteeinrichtung verwendet werden. Da gegensinnig drehende Schneckenwellen ein axial geschlossenes System bilden im Gegensatz zu dem axial offenen System gleichsinnig drehender Schneckenwellen, d. h. gegensinnig drehende Schneckenwellen eine zwangsweise Förderung bedingen, werden gegensinnig drehende Schneckenwellen in der Materialrückhalteeinrichtung im Allgemeinen bevorzugt, da sie das Auftreten von schwarzen Punkten noch rigoroser verhindern.

Zudem ist die Selbstreinigung gegensinnig drehender Schnecken grundsätzlich besser als bei gleichsinnig drehenden Schnecken, da sich bei gegensinnig drehenden Schnecken deren Kämme berühren und an der Innenwand des Zwischengehäuses anliegen, während gleichsinnig drehende Schnecken ein Spiel zwischen den Kämmen der Schnecken und der Innenwand aufweisen. Einem Verschleiß kann durch Härtung der Schnecken und des Zwischengehäuses begegnet werden.

Bei gegensinnig drehenden Schneckenwellen kann außerdem auf Antriebszahnräder an den Schneckenwellen gegebenenfalls ganz verzichtet werden, da nur eine Welle angetrieben zu werden braucht, die die andere Welle durch formschlüssigen Eingriff der Schnecken antreibt. Dadurch wird der Einbau, die Montage und die Wartung der Schneckenwellen wesentli ch vereinfacht.

Die Schneckenwellen der Materialrückhalteeinrichtung sind vorzugsweise mit ihrem Antrieb, beispielsweise einem Antriebszahnrad, einstückig ausgebildet. Damit entfällt die nach dem Stand der Technik vorgesehene Kupplung zwischen Schneckenwelle und Antriebszahnrad. Das Verzweigungsgetriebe, das die Schneckenwellen antreibt, kann damit klein, leicht und kostengünstig gebaut werden.

Damit aus dem Extruder keine giftigen Gase unkontrolliert entweichen können, aber auch, um zu verhindern, dass Luft in den Extruder gelangt, muss das Zwischengehäuse mit der Materialrückhalteeinrichtung mit dem Extrudergehäuse und mit dem Verzweigungsgetriebegehäuse vakuumdicht verbunden werden, wobei das Verzweigungsgetriebegehäuse seinerseits vakuumdicht ausgebildet werden muss.

Da das Verzweigungsgetriebegehäuse Lager, Dichtungen und dergleichen Teile enthält, die bei der hohen Temperatur des Verfahrensteils von beispielsweise ca. 250°C beschädigt werden können, ist es vorteilhaft, zwischen dem Zwischengehäuse mit der Materialrückhalteeinrichtung und dem Verzweigungsgetriebegehäuse eine Wärmeisolierung, beispielsweise eine Isolierplatte anzuordnen.

Der erfindungsgemäße Extruder ist insbesondere zur Verarbeitung von Kunststoffen, wie PVC, PE und anderen geeignet. Da die Bildung von "Black Specks" weitgehend verhindert wird, ist er insbesondere zur Herstellung von transparenten Kunststoffprodukten geeignet, insbesondere glasklaren Produkten, beispielsweise aus PET.

Nachstehend sind Ausführungsformen des erfindungsgemäßen Extruders anhand der beigefügten Zeichnung näher erläutert. Darin zeigen jeweils in perspektivischer Wiedergabe:
Figur 1 ein Segment des Verfahrensteiles des Extruders mit daran angeschlossener Materialrückhalteeinrichtung;
Figur 2 eine Materialrückhalteeinrichtung mit zwei gegensinnig drehenden Schneckenwellen, wobei das Gehäuse der Materialrückhalteeinrichtung ganz und ein Teil des Gehäuses des Verzweigungsgetriebes weggelassen ist;
Figur 3 eine der Figur 2 entsprechende Ansicht, jedoch von einer Materialrückhalteinrichtung mit zwei gleichsinnig drehenden Schneckenwellen;
Figur 4 eine der Figur 2 entsprechende Ansicht, jedoch von Schneckenwellen ohne Antriebszahnräder; und
Figur 5 die von dem Verfahrensteil abgenommene Materialrückhalteeinrichtung.

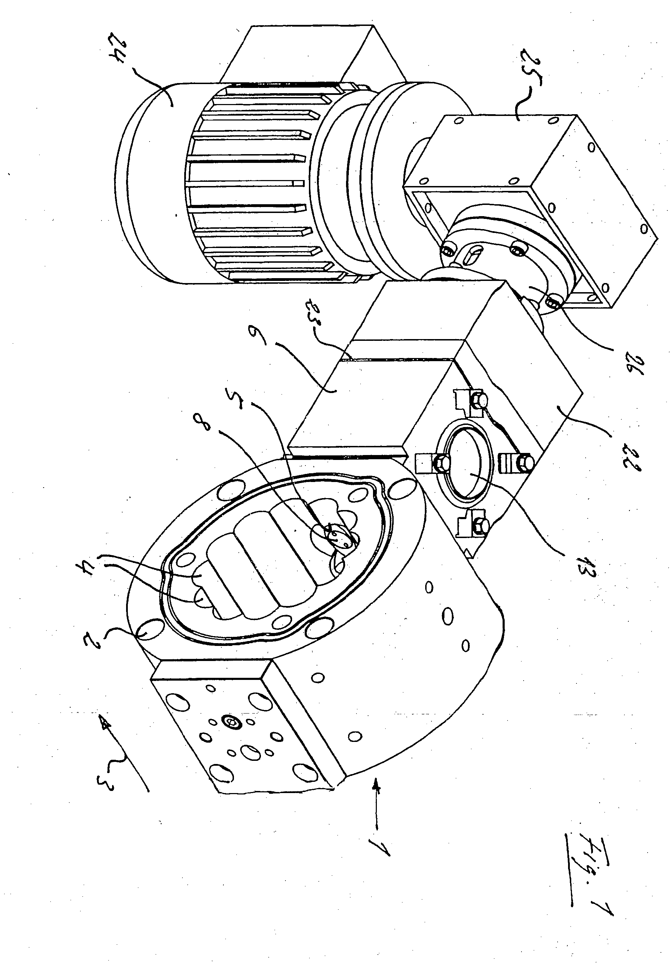

Gemäß Figur 1 ist von dem Verfahrensteils des Extruders nur ein Gehäusesegment 1 dargestellt. Das Verfahrensteil besteht aus mehreren solcher aneinander gereihter Gehäusesegmente, die durch nicht dargestellte Zugstangen miteinander verspannt sein können, die durch die Bohrungen 2 in dem Gehäusesegment 1 geführt sind.

Die Förderrichtung des Verfahrensteils ist mit dem Pfeil 3 dargestellt. Förderaufseitig von dem Segment 1 ist das nicht dargestellte Gehäusesegment mit der Materialeintrittsöffnung angeordnet und förderabseitig das nicht dargestellte Gehäusesegment mit der Materialaustrittsöffnung des Extruders.

Das Verfahrensteil ist als Ringextruder ausgebildet, wie er z. B. in EP 0 788 867 B1 beschrieben ist. Das heißt, durch das Gehäusesegment 1 und die übrigen nicht dargestellten Gehäusesegmente des Verfahrensteils erstreckt sich axial ein nicht dargestellter Innenkern. Zwischen dem Innenkern und den Gehäusesegmenten wird ein ringförmiger Raum gebildet, in dem sich längs eines Kreises mit gleichem Zentriwinkelabstand angeordnete achsparallele rotierbare Wellen erstrecken, von denen jede eine Anzahl hintereinander angeordneter Schnecken- und sonstiger Bearbeitungselemente trägt, mit denen benachbarte Wellen dicht kämmend ineinander greifen, wobei der Innenkern an der innenliegenden Seite dieses Raumes und, wie in Figur 1 dargestellt, die Innenwand der Gehäusesegmente 1 mit rinnenförmigen achsparallelen Vertiefungen 4 versehen ist, in denen die jeweilige Welle mit ihren Bearbeitungselementen aufgenommen und geführt wird.

Das in Figur 1 dargestellte, zwischen der Materialeintr ittsöffnung und der Materialaustrittsöffnung des Verfahrensteils angeordnete Gehäusesegment 1 ist mit einer Zwischenöffnung 5 versehen, um Gase aus dem Kunststoff, der in dem Verfahrensteil bearbeitet wird, zu entfernen.

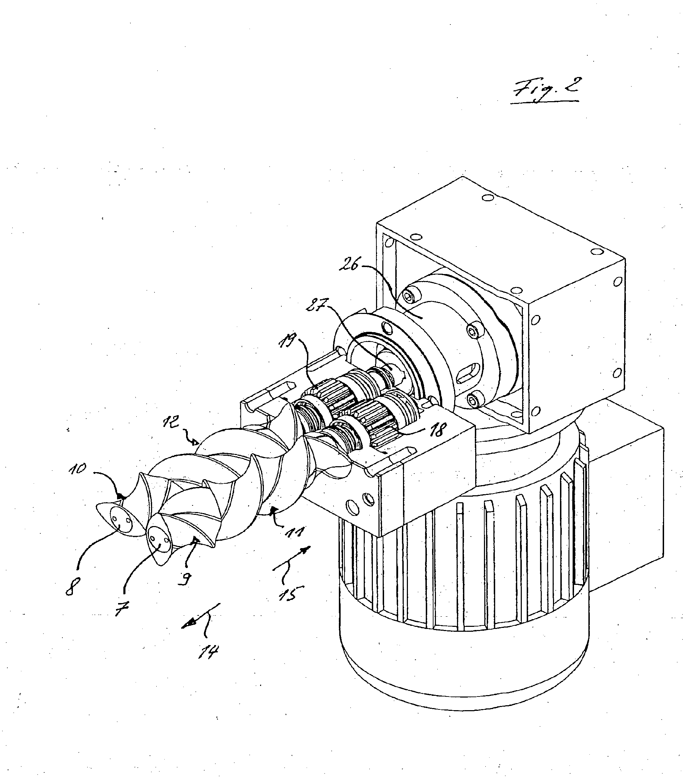

Dazu ist an das Segment 1 ein Zwischengehäuse 6 angeschlossen, in dem zwei achsparallele Schneckenwellen 7, 8 angeordnet sind, die in Figur 2 dargestellt sind und senkrecht zu der Längsachse des Verfahrensteils verlaufen. Jede Schneckenwelle 7, 8 weist ein dem Verfahrensteil zugewandtes, kurzes Schneckenelement 9, 10 und ein von dem Verfahrensteil abgewandtes langes Schneckenelement 11, 12 auf. Die Schneckenelemente 9 und 11 bzw. 10 und 12 der beiden Wellen 7, 8 greifen dicht kämmend ineinander, wobei das Zwischengehäuse 6 an der Innenwand mit nicht dargestellten achsparallelen rinnenförmigen Vertiefungen versehen ist, die die Schneckenelemente 9 bis 12 aufnehmen und damit die Schneckenwellen 7, 8 führen. Die Schneckenelemente 9 bis 12 sind drehfest auf den Schneckenwellen angeordnet, z. B. durch eine Keilverzahnung.

Die Schneckenwellen 7, 8 erstrecken sich mit ihren Schneckenelementen 9 bis 12 von der Zwischenöffnung 5 in dem Gehäusesegment 1 des Verfahrensteils bis zu der Gasaustrittsöffnung 13 in dem Zwischengehäuse 6, über die die von dem Kunststoff in dem Verfahrensteil abgetrennten Gase abgesaugt werden.

Die Schneckenelemente 9, 10 besitzen eine solche Steigungsrichtung, dass sie von dem Verfahrensteil in das Zwischengehäuse 6 eindringendes Kunststoffmaterial in Richtung des Pfeiles 14 zu dem Verfahrensteil zurückfördern. Demgemäss wird diese Einrichtung Materialrückhalteeinrichtung genannt. Demgegenüber besitzen die Schnecken 11, 12 die entgegengesetzte Steigungsrichtung, wodurch Kunststoffmaterial, das über die Schneckenelemente 9, 10 zu den Schneckenelementen 11, 12 gelangt, gemäß dem Pfeil 15 von dem Verfahrensteil weggefördert wird. Aufgrund der hohen Temperatur der Oberfläche der Schneckenelemente 9 bis 12 und der Innenwand des Zwischengehäuses 6 wird Kunststoffmaterial, das längere Zeit an diesen Oberflächen haftet, zersetzt. Während der Kunststoff in dem Bereich der rückfördernden Schneckenelemente 9, 10 ständig erneuert wird und damit eine Zersetzung verhindert ist, werden Kunststoffreste, die zu den fördernden Elemente 11, 12, gelangen, zersetzt. Die zersetzten Kunststoffreste können entweder über die Gasaustrittsöffnung 13 abgesaugt werden, oder in dem von dem Verfahrensteil abgewandten Bereich kann an der Unterseite des Zwischengehäuses 6 eine weitere, nicht dargestellte Öffnung vorgesehen sein, durch die die Kunststoffreste entnommen werden können.

Bei der Ausführungsform nach Figur 2 ist das Schneckenelement 9 an der Schneckenwelle 7 rechtssteigend und das Schneckenelement 11 linkssteigend ausgebildet, während bei der Schneckenwelle 8 das Schneckenelement 10 linkssteigend und das Schneckenelement 12 rechtssteigend ausgebildet ist.

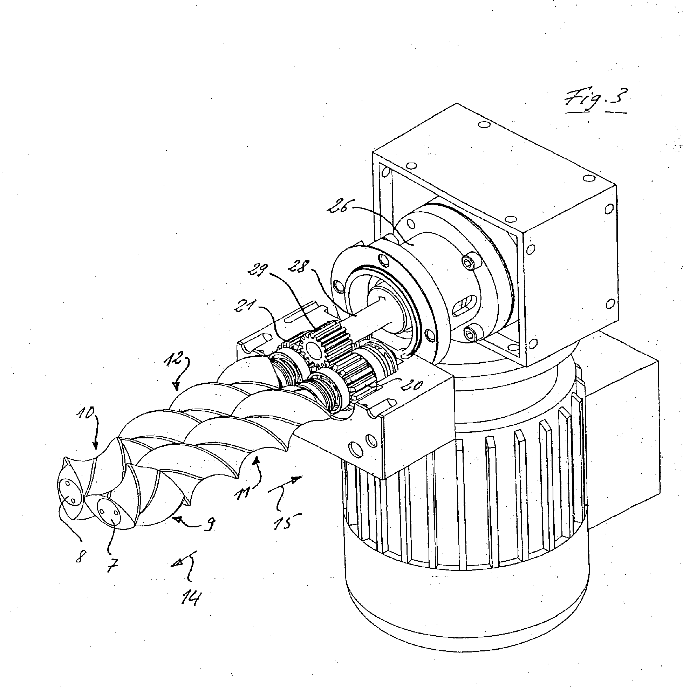

Während in Figur 2 gegensinnig drehende Schneckenwellen 7, 8 dargestellt sind, sind die Schneckenwellen 7, 8 in Figur 3 gleichsinnig drehend angetrieben.

Sowohl die Schneckenwellen 7, 8 gemäß Figur 2, wie die Schneckenwellen 7, 8 gemäß Figur 3 können mit ihren Antriebszahnrädern 18, 19 bzw. 20, 21 einstückig ausgebildet sein.

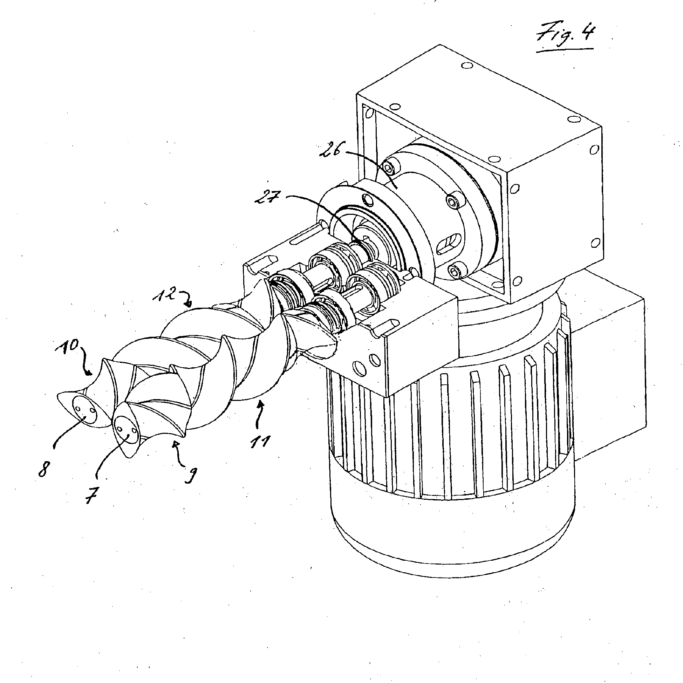

Wie in Figur 4 dargestellt, kann bei zwei gegensinnig drehenden Schneckenwellen 7, 8 auf einen Zahnradantrieb ganz verzichtet werden, da die angetriebene Schneckenwelle 8 durch Eingriff ihrer Schneckenelemente 10, 12 in die Schneckenelemente 9, 11 der Welle 7 letztere antreibt. Das heißt, bei der Ausführungsform nach Figur 4 brauchen die Wellen 7, 8 in dem Verzweigungsgetriebegehäuse 22 lediglich gelagert zu werden.

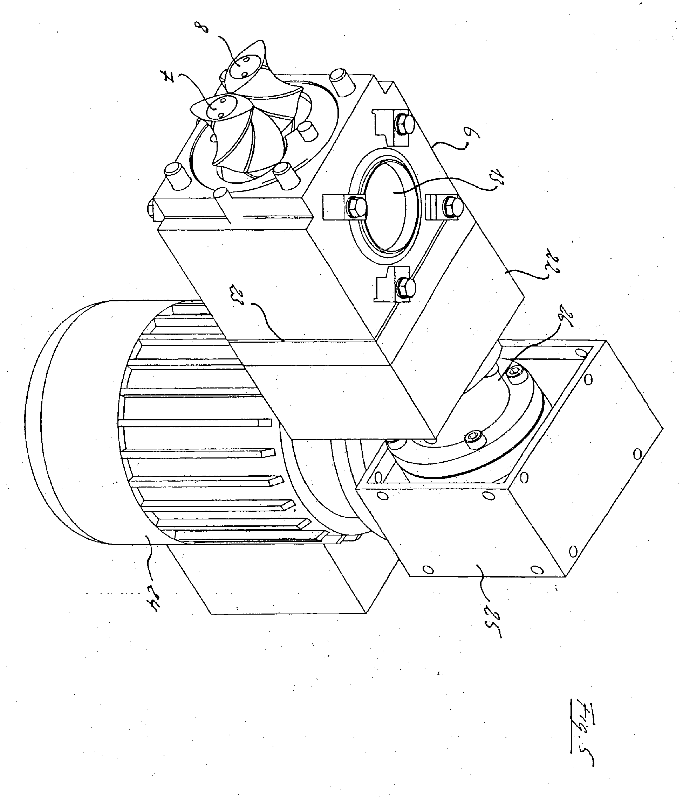

Um das Verfahrensteil vakuumdicht abzudichten, ist gemäß Figur 1 und 5 das Zwischengehäuse 6 an das Gehäusesegment 1 seitlich vakuumdicht angeflanscht. Ferner ist das Zwischengehäuse 6 vakuumdicht an das Verzweigungsgetriebegehäuse 22 angeschlossen. Um die Wärmeübertragung von dem heißen Zwischengehäuse 6 auf das Verzweigungsgetriebegehäuse 22 zu reduzieren, ist eine Platte 23 aus wärmeisolierendem Material zwischen einander gegenüberliegenden Stirnflächen des Zwischengehäuses 6 und dem Verzweigungsgetriebegehäuse 22 angeordnet.

Die Schneckenwellen 7, 8 der Materialrückhalteeinrichtung werden von dem Elektromotor 24 über ein Reduziergetriebe 25 angetrieben. Das Gehäuse 26, das das Reduziergetriebe 25 mit dem Verzweigungsgetriebe verbindet, wird, wie aus Figur 2 bis 4 ersichtlich, lediglich von einer Welle 27, 28 durchsetzt, die mit einer Magnetkupplung vakuumdicht abgedichtet werden kann. Während die Welle 27 bei der Ausführungsform nach Figur 2 und 4 mit gegensinnig drehenden Wellen 7, 8 koaxial zur Welle 8 angeordnet ist, ist die Welle 28 bei der Ausführungsform nach Figur 3 mit gleichsinnig drehenden Wellen 7, 8 mit einem Zahnrad 29 versehen, das mit den Zahnrädern 20, 21 an den Wellen 7, 8 kämmt.

## Patentansprüche

1. Extruder mit einem Verfahrensteil mit einem Gehäuse, in dem wenigstens eine Schneckenwelle angeordnet ist und das an einem Ende eine Materialeintrittsöffnung für das zu bearbeitende Material und eine Materialaustrittsöffnung für das bearbeitete Material am anderen Ende und zwischen der Materialeintrittsöffnung und der Materialaustrittsöffnung zum Gasaustritt aus dem Verfahrensteil eine Zwischenöffnung (5) aufweist, an die eine Materialrückhalteeinrichtung angeschlossen ist, die in einem Zwischengehäuse (6) wenigstens eine Schneckenwelle (7, 8) aufweist, die sich von der Zwischenöffnung (5) zu einer Gasaustrittsöffnung (13) in dem Zwischengehäuse (6) erstreckt und in das Zwischengehäuse (6) eindringendes Material in das Verfahrensteil zurückfördert, **dadurch gekennzeichnet, dass** der dem Verfahrensteil zugewandte Schneckenabschnitt (9, 10) der Schneckenwelle (7, 8) eine in das Verfahrensteil rückfördernde Steigungsrichtung und der vom Verfahrensteil abgewandte Schneckenabschnitt (11, 12) der Schneckenwelle (7, 8) eine entgegengesetzte Steigungsrichtung aufweist.

2. Extruder nach Anspruch 1, **dadurch gekennzeichnet, dass** der Schneckenabschnitt (9, 10) mit rückfördernder Steigungsrichtung kürzer als der Schneckenabschnitt (11, 12) mit entgegengesetzter Steigungsrichtung ausgebildet ist.

3. Extruder nach Anspruch 1 oder 2, **dadurch gekennzeichnet, dass** das Zwischengehäuse (6) an dem von dem Verfahrensteil abgewandten Ende eine Austrittsöffnung für feste Zersetzungsprodukte besitzt.

4. Extruder nach Anspruch 1, **dadurch gekennzeichnet, dass** die Materialrückhalteeinrichtung wenigstens zwei ineinander greifende Schneckenwellen (7, 8) aufweist.

5. Extruder nach Anspruch 4, **dadurch gekennzeichnet, dass** die ineinander greifenden Schneckenwellen (7, 8) gegensinnig drehbar sind.

6. Extruder nach einem der vorstehenden Ansprüche, **dadurch gekennzeichnet, dass** der Antrieb wenigstens einer Schneckenwelle (7, 8) einstückig mit der Schneckenwelle (7, 8) ausgebildet ist.

7. Extruder nach Anspruch 6, **dadurch gekennzeichnet, dass** der Antrieb durch ein Antriebszahnrad (18 bis 21) gebildet wird.

8. Extruder nach Anspruch 6 oder 7, **dadurch gekennzeichnet, dass** der Antrieb in einem Verzweigungsgetriebegehäuse (22) angeordnet ist und eine Wärmeisolierung (23) zwischen dem Verzweigungsgetriebegehäuse (22) und dem Zwischengehäuse (6) der Materialrückhalteeinrichtung vorgesehen ist.

9. Extruder nach einem der vorstehenden Ansprüche, **dadurch gekennzeichnet, dass** zwischen dem Gehäuse des Verfahrensteils und einem sich darin axial erstreckenden Innenkern ein ringförmiger Raum gebildet ist, in dem sich längs eines Kreises mit gleichem Zentriwinkelabstand angeordnete achsparallele rotierbare Wellen erstrecken, von denen jede eine Anzahl hintereinander angeordneter Schnecken- und sonstiger Bearbeitungselemente trägt, mit denen benachbarte Wellen dicht kämmend ineinander greifen, wobei der Innenkern an der innenliegenden Seite dieses Raumes und die Innenwand des Gehäuses mit rinnenförmigen achsparallelen Vertiefungen (4) versehen sind, in denen die jeweilige Welle mit ihren Bearbeitungselementen aufgenommen und geführt wird.

10. Verwendung des Extruders nach einem der vorstehenden Ansprüche zur Extrusion transparenter Kunststoffprodukte.

## Claims

1. An extruder having a process section with a housing in which at least one screw shaft is disposed and which has at one end a material inlet opening for the material to be processed, and at the other end a material outlet opening for the processed material, and, between the material inlet opening and the material outlet opening, for the escape of gas from the process section, an intermediate opening (5) to which a material retaining device is connected which has, in an intermediate housing (6), at least one screw shaft (7, 8) extending from the intermediate opening (5) to a gas outlet opening (13) in the intermediate housing (6) and conveying material penetrating into the intermediate housing (6) back into the process section, **characterized in that** the screw portion (9, 10) of the screw shaft (7, 8) facing the process section has a pitch direction re-conveying into the process section, and the screw portion (11, 12) of the screw shaft (7, 8) facing away from the process section has an opposite pitch direction.

2. The extruder according to claim 1, **characterized in that** the screw portion (9, 10) with the re-conveying pitch direction is configured shorter than the screw portion (11, 12) with the opposite pitch direction.

3. The extruder according to claim 1 or 2, **characterized in that** the intermediate housing (6) has an outlet opening for solid products of decomposition at the end facing away from the process section.

4. The extruder according to claim 1, **characterized in that** the material retaining device has at least two intermeshing screw shafts (7, 8).

5. The extruder according to claim 4, **characterized in that** the intermeshing screw shafts (7, 8) are counter-rotatable.

6. The extruder according to any of the preceding claims, **characterized in that** the drive of at least one screw shaft (7, 8) is formed in one piece with the screw shaft (7, 8).

7. The extruder according to claim 6, **characterized in that** the drive is formed by means of a drive gear (18 to 21).

8. The extruder according to claim 6 or 7, **characterized in that** the drive is disposed in a distribution gear box (22), and heat insulating means (23) are provided between the distribution gear box (22) and the intermediate housing (6) of the material retaining device.

9. The extruder according to any of the preceding claims, **characterized in that**, between the housing of the process section and an inner core axially extending therein, an annular space is formed inside which axially parallel, rotatable shafts extend which are disposed along a circle at equal central-angle distance, each of said shafts carrying a number of screw and other processing elements which are arranged one behind the other and with which adjacent shafts tightly intermesh, with the inner core on the internal side of said space and the inside wall of the housing being provided with channel-shaped, axially parallel recesses (4) in which the respective shaft with its processing elements is received and guided.

10. Use of the extruder according to any of the preceding claims for extruding transparent plastic products.

## Revendications

1. Extrudeuse comportant une pièce de processus avec un boîtier dans lequel est agencé au moins un arbre à vis sans fin et qui présente à une extrémité un orifice d'entrée de matière pour la matière à traiter et à l'autre extrémité un orifice de sortie de matière pour la matière traitée et, entre l'orifice d'entrée de matière et l'orifice de sortie de matière un orifice intermédiaire (5) pour la sortie de gaz hors de la pièce de processus, auquel est raccordé un dispositif de retenue de matière qui présente dans un boîtier intermédiaire (6) au moins un arbre à vis sans fin (7, 8) qui s'étend depuis l'orifice intermédiaire (5) jusqu'à un orifice de sortie de gaz (1.3) dans le boîtier intermédiaire (6) et qui refoule la matière pénétrant dans le boîtier intermédiaire (6) jusque dans la pièce de processus, **caractérisée en ce que** le tronçon de vis sans fin (9, 10) de l'arbre à vis sans fin (7, 8), qui est tourné vers la pièce de processus, présente une direction de pas refoulant dans la pièce de processus et **en ce que** le tronçon de vis sans fin (11, 12) de l'arbre à vis sans fin (7, 8), qui est détourné de la pièce de processus, présente une direction de pas opposée.

2. Extrudeuse selon la revendication 1, **caractérisée en ce que** le tronçon de vis sans fin (9, 10) avec direction de pas refoulant est réalisé plus court que le tronçon de vis sans fin (11, 12) avec direction de pas opposée.

3. Extrudeuse selon la revendication 1 ou 2, **caractérisée en ce que** le boîtier intermédiaire (6) possède à l'extrémité détournée de la pièce de processus un orifice de sortie pour des produits de décomposition solides.

4. Extrudeuse selon la revendication 1, **caractérisée en ce que** le dispositif de retenue de matière présente au moins deux arbres à vis sans fin (7, 8) s'engrenant l'un dans l'autre.

5. Extrudeuse selon la revendication 4, **caractérisée en ce que** les arbres à vis sans fin (7, 8) s'engrenant l'un dans l'autre peuvent tourner en sens inverse.

6. Extrudeuse selon l'une des revendications précédentes, **caractérisée en ce que** l'entraînement d'au moins un arbre à vis sans fin (7, 8) est réalisé d'un seul tenant avec l'arbre à vis sans fin (7, 8).

7. Extrudeuse selon la revendication 6, **caractérisée en ce que** l'entraînement est formé par une roue dentée motrice (18 à 21).

8. Extrudeuse selon la revendication 6 ou 7, **caractérisée en ce que** l'entraînement est agencé dans un boîtier de transmission à dérivation (22) et **en ce qu'**il est prévu une isolation thermique (23) entre le boîtier de transmission à dérivation (22) et le boîtier intermédiaire (6) du dispositif de retenue de matière.

9. Extrudeuse selon l'une des revendications précédentes, **caractérisée en ce que** entre le boîtier de la pièce de processus et un noyau intérieur s'étendant axialement dans celui-ci est formé un espace de forme annulaire dans lequel s'étendent des arbres rotatifs le long d'un cercle, parallèles à l'axe et agencés avec le même écartement par rapport à l'angle au centre, dont chacun porte un nombre d'éléments à vis sans fin et autres éléments de traitement agencés les uns derrière les autres, avec lesquels des arbres voisins s'engrènent étroitement, le noyau intérieur sur le côté situé à l'intérieur de cet espace et la paroi intérieure du boîtier sont pourvus d'évidements (4) en forme de rainures et parallèles à l'axe, dans lesquels l'arbre respectif est reçu et guidé avec ses éléments de traitement.

10. Utilisation de l'extrudeuse selon l'une des revendications précédentes pour l'extrusion de produits en matière plastique transparente.
